Europäisches Patentamt

European Patent Office

Office européen des brevets

(19)

(11)  **EP 1 127 222 B1**

(12)  **EUROPÄISCHE PATENTSCHRIFT**

(45) Veröffentlichungstag und Bekanntmachung des Hinweises auf die Patenterteilung:
**04.12.2002  Patentblatt 2002/49**

(21) Anmeldenummer: **99945988.6**

(22) Anmeldetag: **18.08.1999**

(51) Int Cl.$^7$: **F16B 25/00**

(86) Internationale Anmeldenummer:
**PCT/EP99/06029**

(87) Internationale Veröffentlichungsnummer:
**WO 00/028225 (18.05.2000 Gazette 2000/20)**

(54) **GEWINDESCHNEIDENDE SCHRAUBE**

THREAD-CUTTING SCREW

VIS DE FILETAGE

(84) Benannte Vertragsstaaten:
**AT BE CH CY DE DK ES FI FR GB GR IE IT LI LU MC NL PT SE**

(30) Priorität: **05.11.1998  DE 29819813 U**

(43) Veröffentlichungstag der Anmeldung:
**29.08.2001  Patentblatt 2001/35**

(73) Patentinhaber: **Ludwig Hettich & Co.**
**78713 Schramberg-Sulgen (DE)**

(72) Erfinder:
• **HETTICH, Ulrich**
  **D-78713 Schramberg (DE)**

• **HETTICH, Stefan**
  **D-78713 Schramberg/Sulgen (DE)**

(74) Vertreter: **Liesegang, Roland, Dr.-Ing.**
**FORRESTER & BOEHMERT**
**Pettenkoferstrasse 20-22**
**80336 München (DE)**

(56) Entgegenhaltungen:
**EP-A- 0 623 759       US-A- 4 439 077**
**US-A- 5 674 035       US-A- 5 800 107**

**Beschreibung**

Die Erfindung betrifft eine gewindeschneidende Schraube eingeschraubt in ein vorgebohrtes Loch in Beton, Mauerwerk oder dgl.

Aus der EP 0 623 759 B1 ist eine solche gewindeschneidende Schraube bekannt, die dübellos in Beton, Mauerwerk oder dgl. eingeschraubt werden kann. Dabei ist die Gewindegeometrie durch Wertebereiche für das Verhältnis von Außendurchmesser zu Kerndurchmesser, für das Verhältnis von Außendurchmesser zur Steigung des Gewindes und für den Flankenwinkel des Gewindes definiert. Somit ist die Gewindegeometrie durch drei Parameter bestimmt, die in den beanspruchten Bereichen gewählt werden können, um Schrauben zu erhalten, welche den Anforderungen der Praxis genügen.

Die Tragfähigkeit von Verankerungen in Beton ist, wie bekannt, durch einen funktionalen Zusammenhang zwischen Betonfestigkeit βw, tragende Gewindelänge oder Verankerungstiefe he und Versagenslast F entsprechend der folgenden Gleichung (1) beschreibbar:

$$F = m \cdot he^{1,5} \cdot \sqrt{\beta\ w} \qquad (1)$$

m ist darin eine Konstante mit den Zahlenwerten m = 13 für ungerissenen Beton und m = 7 für gerissenen Beton.

Gewindeschneidende Schrauben nach dem Stand der Technik erreichen zwar diese statischen Lasten, können jedoch nicht entsprechende Lasten in gerissenen Beton einleiten.

Der Erfindung liegt die Aufgabe zugrunde, eine gewindeformende Schraube der eingangs beschriebenen Art so auszugestalten, daß hohe Tragfähigkeit auch in gerissenem Beton oder Mauerwerk erreicht wird.

Diese Aufgabe wird erfindungsgemäß durch Anspruch 1 gelöst. Dadurch wird eine Schraube geschaffen, bei deren Einsatz die übertragbaren Lasten in Beton oder Mauerwerk, in dem Risse, insbesondere dynamische Risse, auftreten können, das Niveau der Tragfähigkeit sowohl in ungerissenem als auch in gerissenem Beton erreichen.

Die Erfindung gibt dem Konstrukteur eine einfache Dimensionierungshilfe bei der Gewindegestaltung und dem Anwender ein einfaches Auswahlkriterium bei der Auswahl der je nach Belastungsfall auszuwählenden Schraubengröße an die Hand.

Die erfindungsgemäße Gestaltung des Gewindes bei einer Schraube gemäß Anspruch 1 berücksichtigt, daß im gerissenen Beton nur begrenzte Pressungen zwischen Gewindeflanke und Beton übertragen werden können. Dem liegt die Erkenntnis zugrunde, daß die zur Lasteinleitung notwendige gesamte tragende Fläche A0 der Gewindeflanken im Beton oder Mauerwerk der statischen Versagenslast F gemäß Gleichung (1) proportional sein muß.

$$A0 = k' \cdot he^{1,5} \qquad (2)$$

worin k' eine Konstante ist.

Die Größe von A0 läßt sich aus der folgenden Beziehung ermitteln:

$$A0 = \frac{da\text{-}dbe}{2}\ \frac{he}{p}\ \sqrt{\left(\frac{da\text{+}dbe}{2}\pi\right)^2 + p^2} \qquad (3)$$

worin

da =     Gewindeaußendurchmesser

dbe =     Bohrereckmaß des Bohrers zum Erzeugen des vorgebohrten Loches

p =     Gewindesteigung

bedeuten.

Durch Gleichung (3) läßt sich ein Zusammenhang zwischen den angegebenen Durchmessern, der Steigung p des Gewindes und der tragenden Fläche A0 der Gewindeflanken herstellen.

Bezieht man die gesamte tragende Fläche A0 auf die tragende Gewindelänge he, so erhält man eine Beziehung zwischen der normierten Fläche A0n und der tragenden Gewindelänge he mit

$$A0/he = A0n = k' \cdot \sqrt{he}, \tag{4}$$

worin k' eine Konstante ist und die Größe A0n die Dimension mm hat.

Die tragende Gewindelänge he ist proportional zum Durchmesser db des vorgebohrten Loches. Somit läßt sich Gleichung (4) umschreiben in

$$A0n = k \ \sqrt{db} \tag{5}$$

worin k eine Konstante der Größe $1 \leq k < 2,5$ ist.

Bevorzugt ist eine Ausführung der gewindeschneidenden Schraube gemäß der Erfindung, bei der die Steigung p des Gewindes der Beziehung

$$p \leq 10\frac{da\text{-}dbe}{2} \tag{6}$$

genügt, worin da der Gewindedurchmesser und dbe das Bohrereckmaß eines Bohrers für das vorgebohrte Loch bedeuten.

Bei einer praktischen Ausführung ist bevorzugt, den Kerndurchmesser dk des Gewindes um 0,2 bis 1 mm kleiner zu wählen als den Nenndurchmesser db des vorgebohrten Loches.

Die tragende Fläche A0 der Gewindeflanken ist eine Funktion der Gewindesteigung p, des Gewindeaußendurchmessers da und des Bohrereckmaßes dbe, wie oben in Gleichung (3) angegeben. Damit ist auch die auf die tragende Gewindelänge he bezogene normierte Fläche A0n von diesen Größen p, da und dbe abhängig.

Für die praktische Anwendung der Erfindung ist ein Bereich kleiner Steigungswerte besonders interessant. Für diesen Bereich gilt die folgende Beziehung zwischen der Steigung p und dem Bohrungs-Nenndurchmesser db:

$$p \leq 5 \cdot \sqrt[3]{db \cdot k} \ . \tag{7}$$

In dem Bereich kleiner Steigungen, in welchem Gleichung (7) erfüllt ist, kann der Wert k unter voller Ausnutzung des Bereiches $1 \leq k \leq 2,5$ ohne Rücksicht auf die aufgrund der Fertigungstoleranzen unterschiedlich ausfallenden Gewindeaußendurchmesser da gewählt werden.

Die im Anspruch 1 angegebene Abhängigkeit der tragenden Gewindefläche A0n vom Bohrungs-Nenndurchmesser db ist unabhängig von der Größe des Gewindeflankenwinkels. Bevorzugt ist jedoch gemäß einer weiteren Ausgestaltung der Erfindung, wenn der Flankenwinkel $\alpha \geq 5°$ ist (siehe DIN 2244).

Ist das Gewinde unsymmetrisch ausgebildet, so haben die jeweils zu einer Querebene E gemessenen Teilflankenwinkel unterschiedliche Werte. In der Summe sollen diese Teilflankenwinkel jedoch auch der Beziehung $\alpha_1 + \alpha_2 \geq 5°$ genügen.

Ein bevorzugter Bereich für die bei der Schraube gemäß der Erfindung angewendeten Flankenwinkel, bzw. die Summe der Teilflankenwinkel, liegt bei $30° < \alpha \leq 50°$.

Für die Konstante k ist ein Bereich $1,75 < k \leq 2,0$ bevorzugt, insbesondere ein Wert von ungefähr $k = 1,75$. Dieser eingeschränkte k-Bereich bzw. der angegebene Wert von k haben sich in Versuchen als günstig besonders bei Schrauben mit größeren Durchmessern herausgestellt.

Es ist ferner vorteilhaft, wenn der Gewindeaußendurchmesser da wenigstens in einem Teilbereich der axialen Ausdehnung der Schraube zum Schraubenkopf hin mit einem Konuswinkel β zwischen 0° und 5° konisch sich erweiternd ausgebildet ist, insbesondere bei großen Setztiefen, bei denen die Vorbohrungen automatisch konisch werden. Eine solche konische Erweiterung kann auch für den Gewindekern vorgesehen sein, und zwar alternativ zur oder gemeinsam mit der konischen Erweiterung des Gewindeaußendurchmessers.

Die größte Dehnung der unter Belastung stehenden Schraube tritt dort auf, wo die Schraube aus dem Gewindeloch austritt. Um hier die gefährlichen Beanspruchungen, insbesondere Kerbspannungen, klein zu halten, ist gemäß einer weiteren vorteilhaften Ausgestaltung der Schraube erfindungsgemäß vorgesehen, daß das Gewindeprofil wenigstens in einem Teilbereich der axialen Ausdehnung der Schraube von einem scharfkantigen Grundprofil ausgehend kontinuierlich in ein Rundgewindeprofil übergeht, welches an der Stelle der größten Dehnung der belasteten Schraube, nämlich am Übergang des Gewindes zum Schraubenschaft, endet.

Die Erfindung ist im folgenden anhand schematischer Zeichnungen an Ausführungsbeispielen mit weiteren Einzelheiten näher erläutert. Es zeigen:

Fig. 1          eine teilweise in ein vorgebohrtes Loch 1 im Beton oder Mauerwerk eingeschraubte Schraube 2 gemäß der Erfindung in perspektivischer Darstellung mit aufgebrochener Bohrung;

Fig. 2          eine Darstellung des vorgebohrten Loches 1 mit durch die Schraube 2 eingeschnittenem Gewinde 3 nach Herausschrauben der Schraube aus diesem Loch in sonst gleicher Darstellung wie Fig. 1;

Fig. 3 und 4    je einen Gewindezahn mit unterschiedlich gestalteten Flankenwinkeln, wie sie bei einer Schraube nach der Erfindung realisierbar sind;

Fig. 5 bis 8    Teilquerschnitte durch die Gewindeteile verschiedener Ausführungen von Schrauben gemäß der Erfindung.

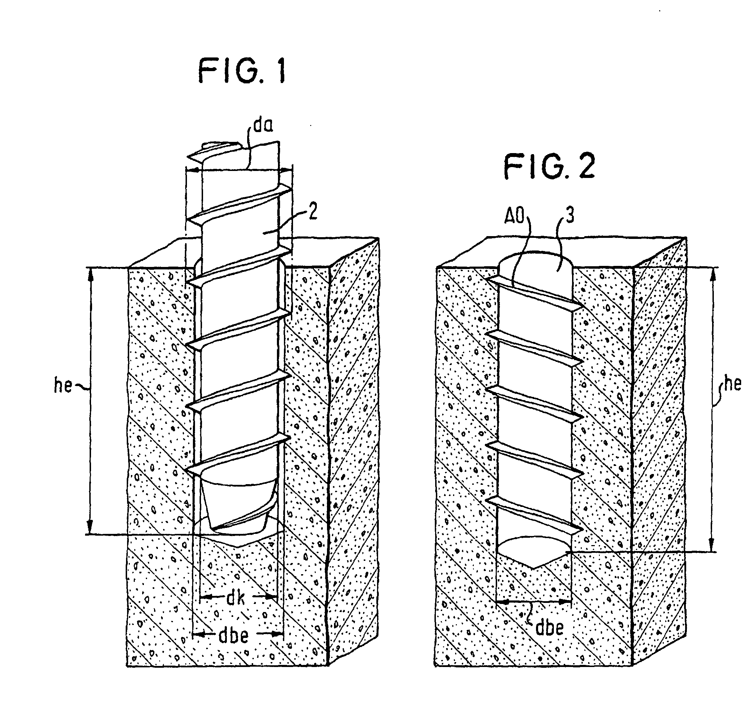

In den Figuren 1 und 2 sind die oben anhand der Gleichungen (1) bis (5) erläuterten, für die Gewindegeometrie maßgeblichen Abmessungen und Größen anschaulich eingetragen.

Gemäß der oben entwickelten Gleichung (5) ist die tragende Gewindefläche A0 nur noch von einem geometrischen Parameter, nämlich von dem Nenndurchmesser db des vorgebohrten Loches, sowie von der Größe der zwischen dem Zahlenwert 1 und dem Zahlenwert 2,5 wählbaren Konstante k abhängig. Dies ermöglicht dem Schraubenkonstrukteur in einfacher Weise ein Dimensionieren der maßgeblichen Abmessungen für die Gewindegestaltung mit größerer Variationsbreite als bei der eingangs beschriebenen bekannten Schraube, wobei die Dimensionierung innerhalb des beanspruchten Bereiches für die Konstante k stets innerhalb der zulässigen Belastungsgrenzen auch in gerissenem Beton erfolgt.

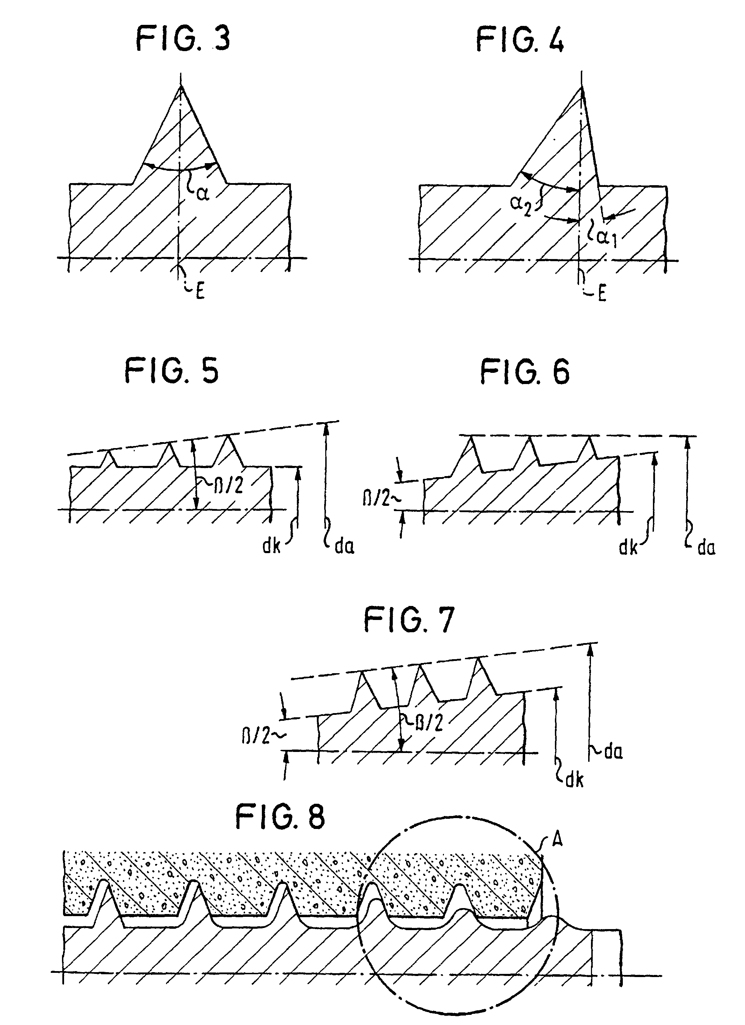

Figur 3 zeigt in einem Teilquerschnitt einer Schraube gemäß der Erfindung einen Gewindezahn mit symmetrisch zu einer Querebene E angeordneten Flanken. Der Flankenwinkel $\alpha$ beträgt hier ca. 50°. In der Praxis liegen die Werte von $\alpha$ über 5° und vorteilhaft im Bereich zwischen 30° und 50°.

Bei dem in Figur 4 dargestellten Gewindezahn sind die Flanken unterschiedlich gegenüber der Querebene E unter Winkeln $\alpha_1$ und $\alpha_2$ geneigt, so daß der Gewindezahn bezüglich der Ebene E unsymmetrisch ist. Dabei beträgt der Teilflankenwinkel $\alpha_1$ zur Ebene E der in Einschraubrichtung weisenden Flanke 10°, während der Teilflankenwinkel $\alpha_2$ der zum Schraubenkopf weisenden Flanke ca. 35° beträgt.

Die Summe der Teilflankenwinkel $\alpha_1$, $\alpha_2$ liegt vorzugsweise auch bei dieser unsymmetrischen Gewindezahn-Konfiguration im Bereich zwischen 30° und 50°.

Bei den Ausführungen nach den Figuren 5 bis 7 ist der Gewindeteil der Schraube zumindest in einem Abschnitt mit einer sich zum Schraubenkopf hin erweiternden Konizität ausgestaltet. Dies ist gemäß den Figuren 5 bis 7 in unterschiedlicher Weise realisiert:

In Figur 5 erweitert sich der Außendurchmesser da konisch, während der Kerndurchmesser dk konstant bleibt. Mit anderen Worten vergrößert sich in dem konischen Gewindeabschnitt kontinuierlich die Zahnhöhe in Richtung zum Schraubenkopf.

Bei der Ausführung nach Figur 6 ist der Außendurchmesser da auch im konischen Bereich konstant, während sich der Kerndurchmesser dk konisch erweitert.

In Figur 7 schließlich erweitern sich sowohl der Kerndurchmesser dk als auch der Außendurchmesser da des Gewindes konisch zum Schraubenkopf hin.

Der Konuswinkel liegt in allen Fällen im Bereich $0° < \beta \leq 5°$.

Die größte Dehnung der Schraube tritt in dem Bereich auf, bei dem das Gewinde aus der entsprechenden Gewindebohrung austritt. In diesem Bereich werden insbesondere die Kerbspannungen am höchsten. Aus diesem Grunde ist bei der Ausführung nach Figur 8 im bei A angedeuteten Bereich das Gewinde in Richtung zum Schraubenkopf (nicht gezeigt) hin zunehmend gerundet und gleichzeitig abgeflacht. Damit werden die Spitzen von Kerbspannungen, die in diesem Bereich insbesondere bei dauerwechselbeanspruchten Schrauben groß ist, wirksam abgebaut und somit einem Dauerbruch vorgebeugt.

**Patentansprüche**

1.  Gewindeschneidende Schraube eingeschraubt in ein vorgebohrtes Loch in Beton, Mauerwerk oder dgl., **dadurch gekennzeichnet, daß** die auf die tragende Gewindelänge he normierte, in die Lochwand des vorgebohrten Lochs eingeschnittene tragende Gewindefläche A0n der belasteten Gewindeflanke vom Bohrungs-Nenndurchmesser db des vorgebohrten Loches wie folgt abhängt:

$$A0n = k \cdot \sqrt{db},$$

worin k eine Konstante der Größe $1 < k \leq 2,5$ ist.

2. Schraube nach Anspruch 1, **dadurch gekennzeichnet, daß** die Steigung p des Gewindes der Beziehung

$$p \leq 10 \,\frac{da\text{-}dbe}{2}$$

genügt, worin da der Gewindedurchmesser und dbe das Bohrereckmaß eines Bohrers für das vorgebohrte Loch bedeuten.

3. Schraube nach Anspruch 1 oder 2, **dadurch gekennzeichnet, daß** die Steigung p des Gewindes wie folgt von dem Nenndurchmesser db abhängig ist:

$$p \leq 5 \cdot \sqrt[3]{db \cdot k}\,.$$

4. Schraube nach einem der Ansprüche 1 bis 3, **dadurch gekennzeichnet, daß** das Gewinde einen Flankenwinkel

$$\alpha \geq 5°$$

hat.

5. Schraube nach Anspruch 4, **dadurch gekennzeichnet, daß** wenigstens ein Teilflankenwinkel

$$\alpha_{1,2} \geq 5°$$

beträgt.

6. Schraube nach Anspruch 4 oder 5, **dadurch gekennzeichnet, daß** der Flankenwinkel oder Teilflankenwinkel

$$30° < \alpha \leq 50°$$

beträgt.

7. Schraube nach einem der Ansprüche 1 bis 6, **dadurch gekennzeichnet, daß** die Konstante k im Bereich

$$1,75 < k \leq 2,0$$

liegt, insbesondere einen Wert von $k \cong 1,75$ hat.

8. Schraube nach einem der Ansprüche 1 bis 7, **dadurch gekennzeichnet, daß** der Gewindeaußendurchmesser (da) wenigstens in einem Teilbereich der axialen Ausdehnung der Schraube zum Schraubenkopf hin konisch sich erweiternd ausgebildet ist.

9. Schraube nach einem der Ansprüche 1 bis 8, **dadurch gekennzeichnet, daß** der Gewindekerndurchmesser (dk) wenigstens in einem Teilbereich der axialen Ausdehnung der Schraube zum Schraubenkopf hin konisch sich erweiternd ausgebildet ist.

10. Schraube nach einem der Ansprüche 1 bis 9, **dadurch gekennzeichnet, daß** das Gewindeprofil wenigstens in einem Teilbereich der axialen Ausdehnung der Schraube von einem scharfkantigen Grundprofil ausgehend kontinuierlich in ein Rundgewindeprofil übergeht, welches an der Stelle der größten Dehnung der belasteten Schraube, nämlich am Übergang des Gewindes zum Schraubenschaft, endet.

**Claims**

1. A thread cutting screw which is screwed into a predrilled hole in concrete, masonry, or the like, **characterized in that** the load bearing thread surface A0n of the loaded thread flank, which surface is related to the load bearing thread length he and cut into the wall of the predrilled hole, depends on the nominal diameter db of the predrilled hole as follows:

$$A0n = k \cdot \sqrt{db}$$

   wherein k is a constant of which the value is $1 < k \leq 2.5$.

2. The screw as claimed in claim 1, **characterized in that** the pitch p of the thread satisfies the relationship

$$p \leq 10 \cdot \frac{da\text{-}dbe}{2}$$

   wherein da = thread diameter and dbe = drill edge dimension of a drilling tool for the predrilled hole.

3. The screw as claimed in claim 1 or 2, **characterized in that** the pitch p of the thread is dependent on the nominal diameter db as follows:

$$p \leq 5 \cdot \sqrt[3]{db \cdot k}.$$

4. The screw as claimed in any one of claims 1 to 3, **characterized in that** the thread has a flank angle

$$\alpha \geq 5\,°.$$

5. The screw as claimed in claim 4, **characterized in that** at least a partial flank angle is

$$\alpha_{1,2} \geq 5\,°.$$

6. The screw as claimed in claim 4 or 5, **characterized in that** the flank angle or partial flank angle is

$$30\,° < \alpha \leq 50\,°.$$

7. The screw as claimed in any one of claims 1 to 6, **characterized in that** constant k lies in the range of

$$1.75 < k \leq 2.0,$$

   especially has a value of $k \cong 1.75$.

8. The screw as claimed in any one of claims 1 to 7, **characterized in that** the outer thread diameter (da) is designed to flare conically towards the screw head at least over part of the axial extension of the screw.

9. The screw as claimed in any one of claims 1 to 8, **characterized in that** the core diameter of the thread (dk) is designed to flare conically towards the screw head at least over part of the axial extension of the screw.

**10.** The screw as claimed in any one of claims 1 to 9, **characterized in that**, starting from a sharp-edged basic profile, the thread profile changes over continually into a round thread profile at least over part of the axial extension of the screw, said round thead profile ending at the location of the greatest elongation of the loaded screw, namely at the transition from the thread to the screw shaft.

**Revendications**

**1.** Vis de filetage vissée dans un avant-trou réalisé dans du béton, un ouvrage de maçonnerie ou analogue, **caractérisée en ce que** la surface porteuse A0n du flanc de filet chargé, entaillée dans la paroi de l'avant-trou, normalisée à la longueur filetée porteuse he, dépend du diamètre nominal db de l'avant-trou comme suit :

$$A0n = k \cdot \sqrt{db},$$

dans lequel k est une constante de valeur $1 < k \leq 2,5$.

**2.** Vis selon la revendication 1, **caractérisée en ce que** le pas p du filetage satisfait à la relation :

$$p \leq 10\frac{da - dbe}{2}$$

dans laquelle da représente le diamètre extérieur et dbe la taille d'un forêt utilisé pour l'avant-trou.

**3.** Vis selon la revendication 1 ou 2, **caractérisé en ce que** le pas p du filetage dépend du diamètre nominal db comme suit :

$$p \leq 5 \cdot \sqrt[3]{db \cdot k} \ .$$

**4.** Vis selon une des revendications 1 à 3, **caractérisée en ce que** le filetage présente un angle entre flancs

$$\alpha \geq 5°$$

**5.** Vis selon la revendication 4, **caractérisée en ce qu'**au moins un angle de partie de flanc vaut

$$\alpha_{1,2} \geq 5°.$$

**6.** Vis selon la revendication 4 ou 5, **caractérisée en ce que** l'angle de flanc ou l'angle de partie de flanc vaut

$$30° < \alpha \leq 50°$$

**7.** Vis selon une des revendications 1 à 6, **caractérisée en ce que** la constante k se situe dans la plage

$$1,75 < k \leq 2,0$$

et présente en particulier une valeur $k \approx 1,75$.

**8.** Vis selon une des revendications 1 à 7, **caractérisée en ce que** le diamètre extérieur de filtrage (da) est réalisé de façon à s'élargir de façon conique vers la tête de la vis au moins dans une région de l'étendue axiale de la vis.

**9.** Vis selon une des revendications 1 à 8, **caractérisée. en ce que** le diamètre du corps (dk) est réalisé de façon à s'élargir de façon conique vers la tête de la vis au moins dans une région de l'étendue axiale de la vis.

10. Vis selon une des revendications 1 à 9, **caractérisée en ce que** le profil de filetage passe de façon continue, au moins dans une région de l'étendue axiale de la vis, d'un profil de base à flancs aigus à un profil de filetage arrondi, qui se termine à l'emplacement de la plus forte extension de la vis chargée, à savoir au passage du filetage au corps de la vis.

# FIG. 1

da

2

he

dk

dbe

# FIG. 2

A0  3

he

dbe

FIG. 3

FIG. 4

FIG. 5

FIG. 6

FIG. 7

FIG. 8